# EUROPEAN PATENT APPLICATION

(11) **EP 1 780 002 A2**
(43) Date of publication of application: **02.05.2007**
(21) Application number: 06021888.0
(22) Date of filing: 19.10.2006
(51) Int. Cl.: B32B 5/02, D04H 13/00

(54) **Textile barrier for containment of liquid hydrocarbons**

(30) Priority: 26.10.2005 US 730240 P
(71) Applicant: Albarrie Canada Limited, Barrie ON L4N 3V7 (CA)
(72) Inventor: Kuziw, Peter, Barrie Ontario L4N 6W3 (CA); Horner, Kevin J., Ontario L0L 2E0 (CA)
(74) Representative: Bugnion Genève

(57) **Abstract**

A water permeable and liquid hydrocarbon-impermeable textile barrier is provided. The textile barrier consists of a textile material as a substrate layer, a layer of a hydrophobic organic chemical swellable in liquid hydrocarbons and a cover layer consisting of a textile material. All three layers are combined together by the needlepunching process in a needle loom. The textile barrier does not significantly obstruct flow of water. The textile barrier allows water to freely drain through.

## Description

### Cross-referenced related applications

This application claims the benefit of U.S. Provisional Application No. 60/730,240 filed 10/26/2005, which is hereby incorporated by reference in its entirety.

### Field of the Invention

The invention relates to the containment of hydrocarbons and in particular to barriers used for the containment of hydrocarbons.

### Background of the Invention

Spills of liquid hydrocarbons (e.g. oils, gasoline, diesel fuel and other petroleum products) from above ground storage tanks and pipelines are a growing environmental problem. Liquid hydrocarbons are complex mixtures of pollutants and relatively small quantities of them can exert extremely toxic effect on land wildlife and marine life.

For environmental reasons, it is desirable to contain oil spills thereby preventing oil from seeping into the soil and contaminating the water supply.

The current Environmental Protection Authority (EPA) regulations require that any above-ground liquid hydrocarbon storage tank for containing potentially hazardous liquids must be surrounded by a secondary containment system capable of storing at least 110% of the liquid that could be contained in the storage tank.

The existing technical solutions rely primarily on - construction of a concrete reinforced containment dike or basin that surrounds and contains a liquid hydrocarbon storage tank. In principle, this approach is effective although very costly. A problem arises however when a hydrocarbon storage tank is located in an open area, especially one subjected to frequent and heavy rainfall. In such cases, any water collected in the containment basin has to be properly managed, treated, purified and properly disposed of. Even a small leak from a liquid hydrocarbon storage tank can contaminate and pollute all water collected in a containment basin, requiring that water to be chemically treated to remove all traces of hydrocarbons. Complex mechanical systems are needed to pump and process contaminated water, requiring continuous supply of electricity, constant monitoring, supervision and frequent maintenance. Mechanical failure or interruption of energy supply can render the removal of hydrocarbons ineffective.

The problem of rain water collection have been addressed in prior art. For example, in U.S. Patent Nos. 5,203,368 and 4,895,272 the construction of a hood or roof above the containment site is recommended. However, such methods are awkward, costly and cannot be applied to certain hydrocarbon storage sites, like electric transformers, which are typically surrounded by high voltage power lines.

Another method to construct a containment site is to use a geotextile liner, like for instance the one described in U.S. Patent No. 5,041,330. This material typically contains a layer of water swellable bentonite powder and allows for effective and cost efficient containment. However, similar to concrete basins, such geotextile liners contain all and every liquid that enters the containment site including rainfall water. As such, geotextile liners suffer from the same shortcomings as the concrete containment sites.

Yet another prior art solution is presented in U.S. Patent No. 5,947,644, which describes a construction of containment barriers using water based polymer slurries. Similar to the concrete and geotextile liner approach described above, this method does not differentiate between water and liquid hydrocarbon fluids and serves only as a containment to collect both.

Attempts have been made to refurbish classical concrete containment sites with semi-automatic drains, like for instance those described in U.S. Patent No. 5,679,246, U.S. Patent No. 6,503,390 and U.S. Patent No. 6,841,077. Those prior art devices typically contain a polymeric swellable material that absorbs liquid hydrocarbons and forms a gel-like material. A layer of the gel acts as a plug in the drain. There are two key problems with these systems (a) they still require a classical concrete containment system to be constructed with its entire mechanical and electrical infrastructure; and (b) the polymer filled drain, due to its limited size, has relatively low water permeability and the permeability of the drain can very quickly be reduced to zero even by small quantities of liquid hydrocarbons if they are present in the water that passes through the drain. All type of drains, in principle, can also become uncontrollably plugged with leaves, debris or plastic bags blown to the containment suite by wind.

Both the concrete, the geotextile liner and polymer slurry based containments are not practical if applied towards protection of liquid hydrocarbon transmission pipelines.

### Summary of the Invention

In one embodiment there is provided a textile barrier for containment of liquid hydrocarbons.

In another embodiment, the textile barrier can be used:
a) to prevent small leakages of liquid hydrocarbons from a liquid hydrocarbon storage container from escaping a containment site while allowing rainwater to pass through the textile barrier; and
b) in case of larger hydrocarbon spills - to fully seal and contain the whole containment site.

In one aspect, there is provided a water permeable and liquid hydrocarbon-impermeable textile for use in the containment of liquid hydrocarbons comprising a substrate layer, a layer of swellable organic chemical, and a cover layer wherein at least one of the substrate layer and the cover layer comprise a non-woven textile material.

In some embodiments, the substrate layer, layer of swellable organic chemical, and cover layer are joined together by needlepunching.

In some embodiments, the non-woven textile material is combined by chemical, thermal or mechanical bonding with one or more woven or knitted textile materials.

In some embodiments, the non-woven textile material has a surface weight in the range from 10 g/m² to 1,000 g/m² and a thickness from 0.1 to 10 mm.

In some embodiments, at least one of the substrate layer and cover layer consists of non-biodegradable synthetic or mineral fiber or filaments.

In some embodiments, at least one of the substrate layer and cover layer is made of polyethylene, polypropylene, polyester PET, polyester PBT, or polyacrylonitrile PAN fibers.

In some embodiments, at least one of the substrate layer and cover layer is made of inorganic mineral fibers.

In some embodiments, the inorganic mineral fibers are selected from the group consisting of glass, ceramic and basalt.

In some embodiments, the total thickness of the combination of the substrate layer, layer of swellable organic chemical, and cover layer is in the range from 1.0 mm to 20 mm.

In another aspect there is provided a method of manufacturing a textile for use in the containment of liquid hydrocarbons comprising the steps of:
i. spreading a substrate layer;
ii. distributing a layer of a swellable organic chemical on top of the substrate layer;
iii. covering the layer of the organic swellable chemical with a cover layer; and
iv. assembling the textile by needlepunching the substrate layer, the layer of swellable organic chemical, and the cover layer in a needling loom wherein at least one of the substrate layer and the top layer are comprised of a non-woven textile material.

Other aspects and features of the present invention will become apparent, to those ordinarily skilled in the art, upon review of the following description of the specific embodiments of the invention.

### Brief Description of the Drawings

The invention will now be described in greater detail with reference to the accompanying diagrams, in which:
Figure 1 is a schematic representation of an embodiment of the textile of the invention as it is used in a containment site for storage source of liquid hydrocarbons;
Figure 2 is a cross-sectional view of an embodiment of the textile of the present invention; and
Figure 3 is a schematic representation of an embodiment of a method of manufacturing the textile of the present invention.

### Detailed Description of the Preferred Embodiments

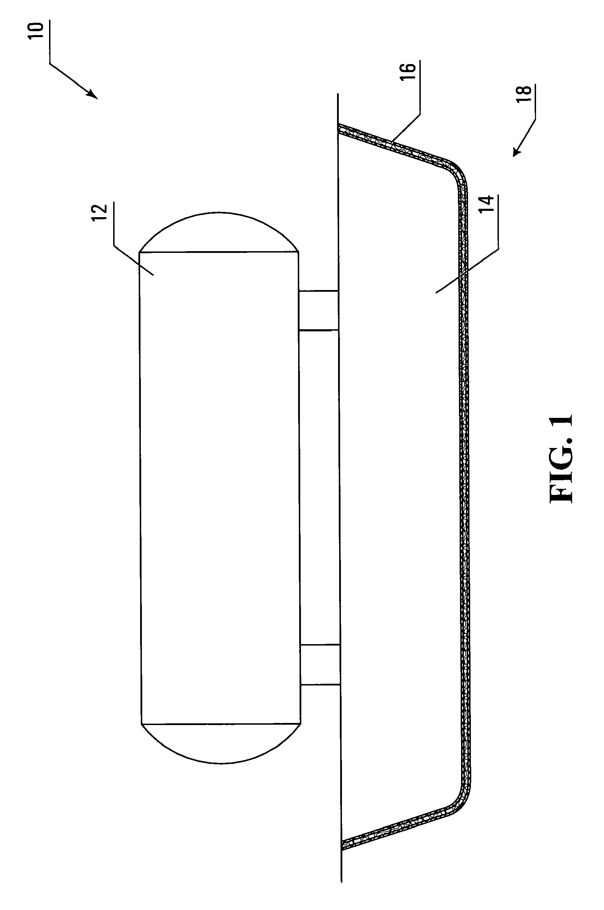

Figure 1 is a schematic diagram of a representative example of a containment site 10 where a textile barrier 16 can be used. In this embodiment, the textile barrier 16 is shown being deployed beneath a ground liquid hydrocarbon storage source, which in this case is liquid hydrocarbon storage tank 12.

Containment site 10 is comprised of storage container 12 for holding liquid hydrocarbons such as oil, gasoline, diesel fuel and/or other petroleum products. Beneath storage container 12 is a spill collection basin 14 that may be utilized to retain hydrocarbon spills and leaks originating with storage container 12.

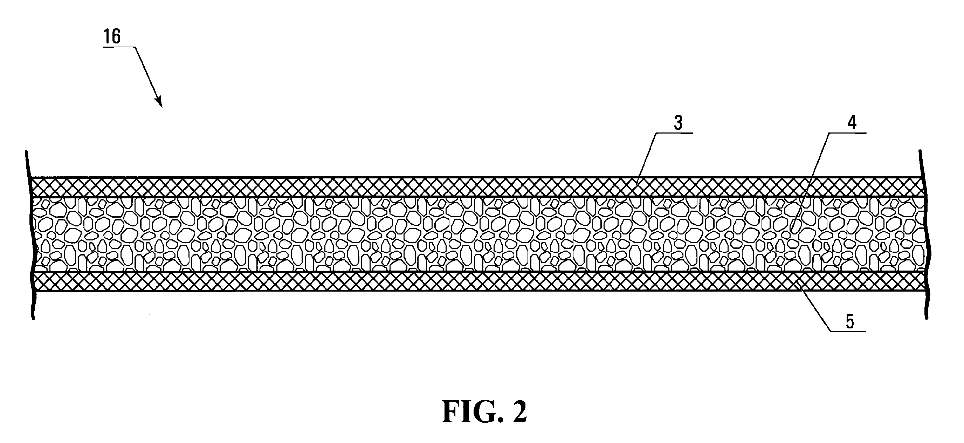

At the bottom of spill collection basin 14 is placed textile barrier 16. The construction of textile barrier 16 will be described in connection with Figure 2. Any hydrocarbon spills and leaks of storage container 12 fall into spill collection basin 14 and settle on textile 16. As described in more detail below, the construction of textile 16 prevents leakages of liquid hydrocarbons from escaping spill collection basin 14 while allowing rainwater to pass through to soil 18.

Persons skilled in the art will appreciate that Figure 1 is just one embodiment where textile barrier 16 can be used to contain liquid hydrocarbon spills and leaks. In some embodiments, textile barrier 16 can be deployed underneath electrical transformers and other electrical devices filled with oil, or beneath liquid hydrocarbon transportation pipelines.

In another embodiment, textile barrier 16 can be also deployed around underground hydrocarbon storage tanks or underground pipelines or another liquid hydrocarbon storage sites. In other embodiments, textile barrier 16 can be deployed around liquid hydrocarbon transfer sites (e.g. truck, railway or sea ports). In yet other embodiments, textile barrier 16 can be deployed directly on the ground or it can be buried in soil being a part of a more complex containment system.

The list of possible applications for textile barrier 16 is not limited to the above mentioned and may include other sites that require protection from liquid hydrocarbon spills or leaks.

Figure 2 illustrates one embodiment of textile barrier 16 which in this case is comprised of a layer 4 of solid hydrophobic organic chemical swellable in liquid hydrocarbons encapsulated between two layers of textile materials, the bottom (substrate) layer 5 and top (cover) 2 layer preferably made of woven or non-woven fabrics. The complete textile structure is assembled by needlepunching process in a needling loom.

At least one of the substrate layer 5 and top layer 2 must be made of non-woven fabrics, or at least a combination of non-woven and woven fabrics. The nonwoven component is what allows the integration of the substrate layer 5 and the cover layer 2 during the needlepunching process.

The nonwoven fabric component is constructed from loosely connected/interlocked fibers, which are typically cut fibers with lengths ranging from 50 to 75 mm. During the needlepunching process, fibers from the nonwoven fabric (i.e. from the substrate layer 5 or cover layer 2) are drawn by the needles (typically, special needles) and anchored into the opposite fabric layer. The opposite fabric layer does not have to be nonwoven. It may be purely a woven structure. In one embodiment, the needling process is done by drawing the fibers from the top layer 2 and anchoring them into the substrate layer 5. In such case the needles go from the top to the bottom. This is a typical way to run such process. However, needling systems exist where needles are on both sides of the fabric (top and bottom) and the needling process is done from top to bottom and from bottom to top (either simultaneously or in two separate stages).

The organic swellable chemical contained in layer 4 can be one of, but is not limited to, the following groups of organic chemicals:
i. hydrophobic swellable polymer selected from a group of hydrogenated poly(styrene-isoprene)(SEP copolymer);
ii. hydrophobic swellable polymer selected from a group of hydrogenated poly(styrene-isoprene-styrene)(SEPS copolymer);
iii. hydrophobic swellable polymer selected from a group of hydrogenated poly(styrene-butadienestyrene)(SEBS copolymer);
iv. hydrophobic swellable polymer selected from a group of hydrogenated poly(styrene-isoprene/butadiene-styrene)(copolymer SEEPS);
v. hydrophobic swellable polymer selected from a group of EPDM rubbers in powdered or granular form;
vi. aluminum soaps of naphtenic and palmitic acids, preferably aluminum octoate in powdered or granular form; and
vii modified polyamide hydrocarbon gellants and resin blends. These gellants and resin blends may be, for example, light-coloured polyamides. Examples include ester-terminated polyamides, tertiary amide terminated polyamides, ester-terminated poly(ester-amides), polyalkyleneoxy-terminated polyamides and polyether polyamides. The polyamides may also be, for example, vegetable based or vegetable-dimer based. An exemplary gellant comprises an ethylenediamine/stearyl dimer dilinoleate copolymer. A number of proprietary gellants and resins are commercially available, such as those available from Arizona Chemical and sold under the trademarks UNICLEAR, SYLVAGEL, SYLVACLEAR and SYLVACOTE in powder or granular form. Without limitation, and by way of example, proprietary, commercially available gellants include, SYLVAGEL 5000, SYLVAGEL 5100, SYLVAGEL 6000, SYLVAGEL 6100, SYLVACLEAR A200, SYLVACLEAR A2635, SYLVACLEAR A2614, and SYLVACLEAR C75V.

The organic swellable chemical 4 can also be a mixture off all the above in any proportion.

Most polymers that are recommended for the use with embodiments of the invention are rubbers, sometimes referred to as "thermoplastic rubbers". Some grades of those materials are available in form of powders and in that specific form they are to be used. However, in general, rubbers in powder form, have very strong tendency to agglomerate, forming large lumps of solid material. This makes these materials very difficult to handle, disperse, distribute, etc. To prevent agglomeration of powdered rubbers, manufacturers of those products sometimes add inorganic or organic additives. The mechanism the additives work is by coating each individual particle of rubber and forming a thin, non-sticky layer around it. The additives can be both is solid or liquid form. The simplest solid additive is talc (commonly used in baby powder formulas). Talc is widely used in rubber industry to prevent powdered rubber from agglomeration. An example of a liquid anti-agglomeration additive is silicone oil or liquid wax. Waxes can also be used in solid form, when they are pulverized and added in solid form to polymers just like talc.

Proper selection of the organic swellable chemical 4 depends on the type of the liquid hydrocarbon which the textile barrier is intended to contain. Listed above are groups of polymers and other chemicals that work particularly well. This is based on chemical reactivity and properties of specific types of polymers. Within each group of polymers, there is a multitude of commercial grades that differ slightly due to for instance molecular weight or molecular arrangement of polymer components. The objective is to find a polymer that quickly reacts with the tested hydrocarbon forming a gel. The gel that forms acts as a barrier preventing hydrocarbon from flowing though the fabric.

The organic swellable chemical 4 does not absorb or react with water. The organic swellable chemical 4 does not significantly obstruct the flow of water. Instead, layer 4 allows water to freely drain through.

The layer of organic swellable chemical 4 when exposed to an excess of liquid hydrocarbons forms an impermeable barrier due to hydrophobic organic swellable chemical reacting with or absorbing the hydrocarbon and forming a gel. The formed layer of gel remains contained between textile layers 3, 5 and forms an impermeable barrier that allows for the automatic containment of liquid hydrocarbons. The reaction of the organic swellable chemical with liquid hydrocarbons takes place upon contact of the liquid hydrocarbon with the organic swellable chemical.

In one embodiment, the present invention is fully automated and does not require supervised operation, does not require a power supply, and does not require maintenance. In one embodiment, there is a simplicity and low cost of deployment, as well as high water permeability, i.e. allowing the drainage of large quantities of rainfall water quickly and effectively. In one embodiment, there is also resistance to plugging, ability to filter out small hydrocarbon leaks from large volume of rain water, and quick response time to catastrophic hydrocarbon spills.

In one embodiment, shear forces can be transferred from one textile layer to the other. For example, on a sloped surface, shearing forces can be transmitted by the covering layer through the layer of organic swellable chemical into the bottom layer. In this embodiment, the covering layer and bottom layer are mechanically connected and will not slide if the whole assembly is put vertically. This is shown in Figure 1 where textile barrier 16 is shown lying at the bottom of spill collection basin 14 but also covering the sloped sidewalls. The side of textile barrier 16 that touches the ground/soil will in principle anchor itself to the surface of the soil by mechanical friction forces, for example. However, the covering layer will be exposed to shear forces acting in the downwards direction. Without a mechanical connection between these layers, the covering layer would slide down. The mechanical connection between these layers transfers the shear forces acting on one side of the covering layer to the other side of the covering layer. Since the other side of the covering layer is mechanically anchored to the soil layer, the entire structure will remain intact.

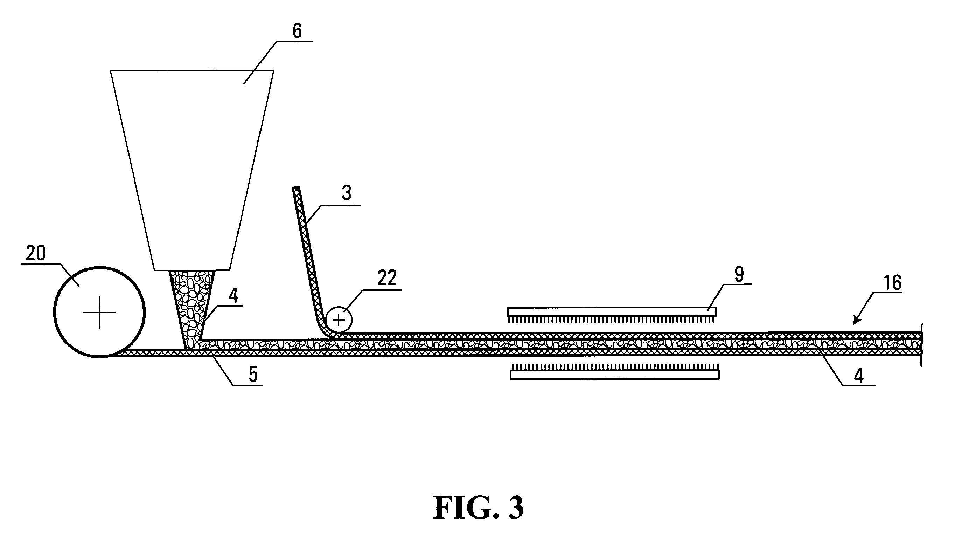

Figure 3 illustrates an embodiment of a method of manufacturing the textile barrier of the present invention. The method comprises the following steps:
i. spreading the substrate (bottom layer) 5 of the textile barrier 16;
ii. distributing a layer 4 of a solid organic swellable chemical on top of bottom layer 5;
iii. covering layer 4 of the organic swellable chemical with a cover layer (top layer) 3 of the textile batter 16; and
iv. assembling the complete textile structure by needlepunching process in a needling loom.

In summary, an embodiment of the method is as follows. A roll of a textile material is placed on reel 20 and is guided into a needling loom as a substrate 5. A predetermined amount of a solid organic swellable material 4 is fed by means of a dispensing system 6 on top of the moving substrate forming a continuous layer of predetermined surfaced density and thickness on top of the substrate 5. Such composition is covered with a layer of the cover textile material 3, dispensed from reel 22. The three layers (substrate layer 5, swellable organic material 4 and cover layer 3) are joined together by a needlepunching process carried out in needling loom 9. The needlepunching process makes multiple individual holding fibers to extend through the layer of the organic swellable chemical 4 and to anchor into the substrate 5.

In one embodiment, the needlepunching process is done in such way that the substrate layer 5 and the top layer 2 are connected together in a strong and permanent way such that they do not fall apart easily when one layer (substrate or cover) is subject to movement and the opposite layer does not move. The mechanisms of connecting the substrate layer 5 and the top layer 2 relies on the fact that fibers from a nonwoven fabric are pushed through the layer of the swellable organic material 4 and mechanically anchored in the opposite later of textile material which can be either nonwoven or woven.

More details of the method described above are now provided.

The bottom (substrate) layer of the textile material 5 is typically unwound from roll 20 and first guided to the organic swellable chemical distribution system 6. The distribution system covers the substrate 5 with a layer of the organic swellable chemical 4. The textile substrate 5 with the layer 4 of the organic swellable chemical is then covered with a top (cover) layer 3 of textile material. The structure (comprising substrate 5, organic swellable chemical 4 and cover 3) is guided to a needling loom 9 and subjected to a needlepunching process in needling loom 9. In the needlepunching process top and bottom layers 3, 5 of the assembly are joined together by fibers drawn from the top (cover) layer 3 and anchored into the bottom (substrate) layer 5 producing a uniform textile structure with layer 4 of the organic swellable chemical securely locked inside the structure.

Fibers that extend from top layer 3 and anchor into substrate layer 5 form a strong mechanical bond between layers interlocking the organic swellable chemical 4 between textile layers 3, 5.

The mechanical bond formed by the fibers from the top layer 3 interlocked in the needling process with the fibers of the substrate 5 provides counteracting action against the swelling pressure of the organic swellable chemical when the organic swellable chemical absorbs liquid hydrocarbons. Strong and permanent mechanical containment of the organic swellable chemical between two layers of textile materials 3, 5 is desirable.

The substrate layer 5 and cover layer 3 are selected from the group consisting of non-woven textile material, woven fabric and knitted fabric, or any combination of thereof, with the condition that at least one of the substrate layer 5 and the cover layer 3 is comprised fully or partially of a non-woven textile material.

The organic swellable chemical is of a granulated or powdered form.

In one embodiment, at least 95% of the particles pass through Standard Sieve Size 5.6 mm, also known as Sieve No. 3 ½ (ASTM E 11 - 04).

The surface density [g/m²] of the organic swellable chemical between substrate layer and cover layer is in direct relation to the swelling capacity of the organic swellable chemical and the required hydrocarbon retention. In one embodiment, the surface density of the organic swellable chemical is in the range from 10 g/m² to 5,000 g/m². In one embodiment the surface density of organic swellable chemical is in the range from 1,500 g/m² to 3,000g/m².

The applied non-woven textile materials (both, the bottom substrate and the top layer) have surface weight in the range from 10 g/m² to 1,000 g/m² each. In one embodiment the surface weight of the textile material is in the range from 200 g/m² to 400 g/m² each.

The applied non-woven textile material is preferably a non-woven, needlepunched fabric produced from polypropylene, polyester (PET) or other synthetic or natural fibers or fiber blends, having total thickness from 0.1 mm to 10 mm. The non-woven textile material can be previously attached by chemical, thermal or mechanical bonding method of needlepunching to a reinforcing woven fabric (so called scrim) for improved dimensional stability and tensile strength.

### Example

The following textile materials were used in the production of the textile barrier for containment of liquid hydrocarbons:
cover layer (top layer): nonwoven, needlepunched fabric made from polypropylene staple fibers needled on 100 g/m² woven polypropylene scrim.
substrate layer (bottom layer): nonwoven, needlepunched fabric made from polypropylene staple fibers needled on 100 g/m² woven polypropylene scrim.

Table 1 lists technical parameters of the textile materials.

**Table 1**

| | cover layer (top layer) | substrate layer (bottom layer) |
|---|---|---|
| Surface density [g/m²] | 330 | 200 |
| Thickness [mm] | 2.25 | 1.25 |
| Tensile strength [N/10 cm] | 500 | 500 |
| Elongating at break [%] | 15 | 15 |

Both the cover and substrate layers were standard, commercially available textile products consisting of needlepunched polypropylene staple fibers or fiber blends.

The organic swellable chemical used was a commercially available of hydrogenated poly(styrenebutadiene-styrene) polymer. A hydrogenated poly(styrene-butadiene-styrene) polymer was chosen with intrinsic viscosity in the range from 0.70 to 0.75 dl/g. The bulk density of the polymer material was about 0.2 g/cm³ and the particle size was 95% below 3 mm. A layer of the hydrogenated poly(styrene-butadiene-styrene) polymer was formed on top of the substrate layer in such way, as to obtain polymer surface density of about 2,500 g/m². The three layers were assembled together by needlepunching process in a needling loom.

The textile barrier for containment of liquid hydrocarbons produced in the needling operation had parameters listed in Table 2.

**Table 2**

| Parameter | Value |
|---|---|
| Surface density [g/m²] | 3,500 |
| Thickness [mm] | 10 |
| Tensile strength [N/10 cm] | 750 |
| Elongating at break [%] | 25 |

What has been described is merely illustrative of the application of the principles of the invention. Other arrangements and methods can be implemented by those skilled in the art without departing from the spirit and scope of the present invention.

## Claims

1. A water permeable and liquid hydrocarbon-impermeable textile for use in the containment of liquid hydrocarbons comprising a substrate layer, a layer of swellable organic chemical, and a cover layer, wherein at least one of the substrate layer and the cover layer comprise a non-woven textile material.

2. The textile of claim 1 wherein the substrate layer, layer of swellable organic chemical, and cover layer are joined together by needlepunching.

3. The textile of claim 1 or claim 2, wherein the non-woven textile material is combined by chemical, thermal or mechanical bonding with one or more woven or knitted textile materials.

4. The textile of any one of claims 1 to 3, wherein the non-woven textile material has a surface weight in the range from 10 g/m² to 1,000 g/m² and a thickness from 0.1 to 10 mm.

5. The textile of any one of claims 1 to 4, wherein at least one of the substrate layer and cover layer consists of non-biodegradable synthetic or mineral fiber or filaments.

6. The textile of any one of claims 1 to 5, wherein at least one of the substrate layer and cover layer is made of polyethylene, polypropylene, polyester PET, polyester PBT, or polyacrylonitrile PAN fibers.

7. The textile of any one of claims 1 to 6, wherein at least one of the substrate layer and cover layer is made of inorganic mineral fibers.

8. The textile of claim 8 wherein the inorganic mineral fibers are selected from the group consisting of glass, ceramic and basalt.

9. The textile of any one of claims 1 to 8, wherein the layer of swellable organic chemical is uniformly distributed and the surface density of the swellable organic chemical is in the range from 10 g/m² to 5,000 g/ₘ2.

10. The textile of any one of claims 1 to 9, wherein the swellable organic chemical is selected from the group consisting of hydrophobic swellable polymer from a group of hydrogenated poly(styrene-isoprene)(SEP copolymer); hydrophobic swellable polymer from a group of hydrogenated poly(styrene-isoprene-styrene)(SEPS copolymer); hydrophobic swellable polymer from a group of hydrogenated poly(styrene-butadiene-styrene)(SEBS copolymer); hydrophobic swellable polymer from a group of hydrogenated poly(styrene-isoprene/butadiene-styrene)(copolymer SEEPS); hydrophobic swellable polymer from a group of EPDM rubbers in powdered or granular form; aluminum soaps of naphtenic and palmitic acids, preferably aluminum octoate in powdered or granular form; modified polyamide hydrocarbon gallants and resin blends, preferably light-coloured polyamides, ester-terminated polyamides, tertiary amide terminated polyamides, ester-terminated poly(ester-amides), polyalkyleneoxy-terminated polyamides, polyether polyamides, vegetable based or vegetable-dimer based, ethylenediamine/stearyl dimer dilinoleate copolymer and a mixture of all the above in any proportion.

11. The textile of any one of claims 1 to 10, wherein the swellable organic chemical further comprises at least one of inert particle separating, inorganic, organic solid, and liquid chemicals to prevent agglomeration of particles of solid chemicals.

12. The textile of any one of claims 1 to 11, wherein the at least one of inert particle separating, inorganic, organic solid, and liquid chemicals comprise talc, fumed silica, precipitated silica, solid waxes, liquid waxes, and silicone oils.

13. The textile of any one of claims 1 to 12, wherein the swellable organic chemical has a particle distribution such that at least 95% of the particles passes through Standard Sieve Size of 5.6 mm.

14. The textile of any one of claims 1 to 13, wherein the total thickness of the combination of the substrate layer, layer of swellable organic chemical, and cover layer is in the range from 1.0 mm to 20 mm.

15. The textile of claim 3, whereby when a shear force acts on one of the substrate layer and the cover layer, a mechanical connection transfers the shear force to the other of the substrate layer and the cover layer.

16. A method of manufacturing a textile for use in the containment of liquid hydrocarbons comprising the steps of:
i. spreading a substrate layer;
ii. distributing a layer of a swellable organic chemical on top of the substrate layer;
iii. covering the layer of the organic swellable chemical with a cover layer; and
iv. assembling the textile by needlepunching the substrate layer, the layer of swellable organic chemical, and the cover layer in a needling loom,
wherein at least one of the substrate layer and the top layer are comprised of a non-woven textile material.
